# EUROPEAN PATENT APPLICATION

(11) **EP 2 930 607 A1**
(43) Date of publication of application: **14.10.2015**
(21) Application number: 14461525.9
(22) Date of filing: 10.04.2014
(51) Int. Cl.: G06F 3/06, G06F 17/30

(54) **Method and apparatus for increasing available portable memory storage space**

(71) Applicant: Patents Factory Ltd. Sp. z o.o., 65-043 Zielona Gora (PL)
(72) Inventor: Paczkowski, Jacek, 65-043 Zielona Góra (PL)
(74) Representative: Blonski, Pawel

(57) **Abstract**

A portable memory system, the system comprising a data bus communicatively coupled to a memory; a controller communicatively coupled to the data bus; a first communication interface, communicatively coupled to the data bus, for connecting the system to a computer; the system further comprising a second communication interface being inaccessible via the first communication interface configured to communicate with a cloud storage service; cloud files and directories hierarchy module configured to store information regarding data stored in the cloud storage service; a cloud cache module configured to store locally files that are selectively determined, by the cloud storage service, as required to be stored locally; wherein the controller is configured to accept read and write requests via the first communication interface; and wherein the controller is configured to report total storage space value assigned to an account, at the cloud storage service, associated with the system as total storage capacity of the system and to report available storage space value assigned to an account, at the cloud storage service, associated with the system as available storage capacity.

## Description

The present invention relates to a method and apparatus for increasing available portable memory storage space. In particular the present invention relates to managing a portable memory storage space in a cloud computing/storage environment.

Prior art defines a term of cloud storage, which according to Wikipedia is a model of networked enterprise storage where data is stored in virtualized pools of storage which are generally hosted by third parties. Hosting companies operate large data centers, and people who require their data to be hosted buy or lease storage capacity from them. The data center operators, in the background, virtualize the resources according to the requirements of the customer and expose them as storage pools, which the customers can themselves use to store files or data objects. Physically, the resource may span across multiple servers and multiple locations. The safety of the files depends upon the hosting companies, and on the applications that leverage the cloud storage.

Cloud storage services may be accessed through a web service application programming interface (API) or by applications that utilize the API, such as cloud desktop storage, a cloud storage gateway or Web-based content management systems.

On the other hand, portable memory devices such as memory sticks, solid state drives or the like, are very popular among users but are usually limited in storage space to tens or hundreds of gigabytes.

It would be advantageous to increase available portable memory storage space, while also increasing data safety and allow for recovery of data in case of loss or damage of such portable memory storage space. It would also be advantageous to selectively share data among a group of devices or users.

The aim of the development of the present invention is an improved and cost effective method and apparatus for increasing available portable memory storage space.

An object of the present invention is a portable memory system, the system comprising a data bus communicatively coupled to a memory; a controller communicatively coupled to the data bus; a first communication interface, communicatively coupled to the data bus, for connecting the system to a computer; the system comprising: a second communication interface being inaccessible via the first communication interface configured to communicate with a cloud storage service; cloud files and directories hierarchy module configured to store information regarding data stored in the cloud storage service; a cloud cache module configured to store locally files that are selectively determined, by the cloud storage service, as required to be stored locally; wherein the controller is configured to accept read and write requests via the first communication interface; and wherein the controller is configured to report total storage space value assigned to an account, at the cloud storage service, associated with the system as total storage capacity of the system and to report available storage space value assigned to an account, at the cloud storage service, associated with the system as available storage capacity.

Preferably, the first communication interface is a USB or Bluetooth or Wi-Fi interface.

Preferably, the system is configured to connect automatically to the cloud storage service storing user's data files.

Preferably, the second communication interface is a 3G or WiMax or LTE interface.

Preferably, the system comprises a cryptographic module operating under control of the controller and configured to encrypt and decrypt data communicated via the second communication interface.

Another object of the present invention is a method for reading data in a system according to the present invention, the method comprising the steps of: connecting the system to a host computer by means of the first communication interface; obtaining and reporting, via the first communication interface, total and available storage space; providing access to files and directories structure stored in the cloud files and directories hierarchy module; awaiting reception of data regarding selection of a file for reading; verifying presence of the selected file in the cloud cache; in case the selected file is not present in the cloud cache, authorizing access to the cloud storage service via the second communication interface; removing sufficient space in the cloud cache to store the selected file; downloading the selected file from the cloud storage service into the cloud cache via the second communication interface; and output the selected file from the cloud cache via the first communication interface.

Another object of the present invention is a computer program comprising program code means for performing all the steps of the computer-implemented method for reading data according to the present invention when said program is run on a computer.

Another object of the present invention is a computer readable medium storing computer-executable instructions performing all the steps of the computer-implemented method for reading data according to the present invention when executed on a computer.

Another object of the present invention is a method for writing data in a system according to the present invention, the method comprising the steps of: connecting the system to a host computer by means of the first communication interface; obtaining and reporting, via the first communication interface, total and available storage space; providing access to files and directories structure stored in the cloud files and directories hierarchy module wherein each file has a corresponding priority factor; awaiting reception of a file write request; storing the file, received via the first communication interface, in the cloud cache; assigning the highest priority to the file; transmitting the new file is to the cloud storage service via the second communication interface; updating the cloud files and directories hierarchy information stored in module.

Preferably, the method further comprises the step of removing, in case there is insufficient space in the cloud cache to store the new file in its entirety, files having the lowest priority, from the cloud cache, up to a point when the new file may be stored in the cloud cache.

Another object of the present invention is a computer program comprising program code means for performing all the steps of the computer-implemented method for writing data according to the present invention when said program is run on a computer.

Another object of the present invention is a computer readable medium storing computer-executable instructions performing all the steps of the computer-implemented method for writing data according to the present invention when executed on a computer.

These and other objects of the invention presented herein are accomplished by providing a method and apparatus for increasing available portable memory storage space. Further details and features of the present invention, its nature and various advantages will become more apparent from the following detailed description of the preferred embodiments shown in a drawing, in which:
Fig. 1 presents a diagram of the system according to the present invention;
Fig. 2 presents content relation between cloud storage system and cloud cache memory;
Fig. 3 presents a method according to the present invention; and
Fig. 4 shown a process of writing data.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

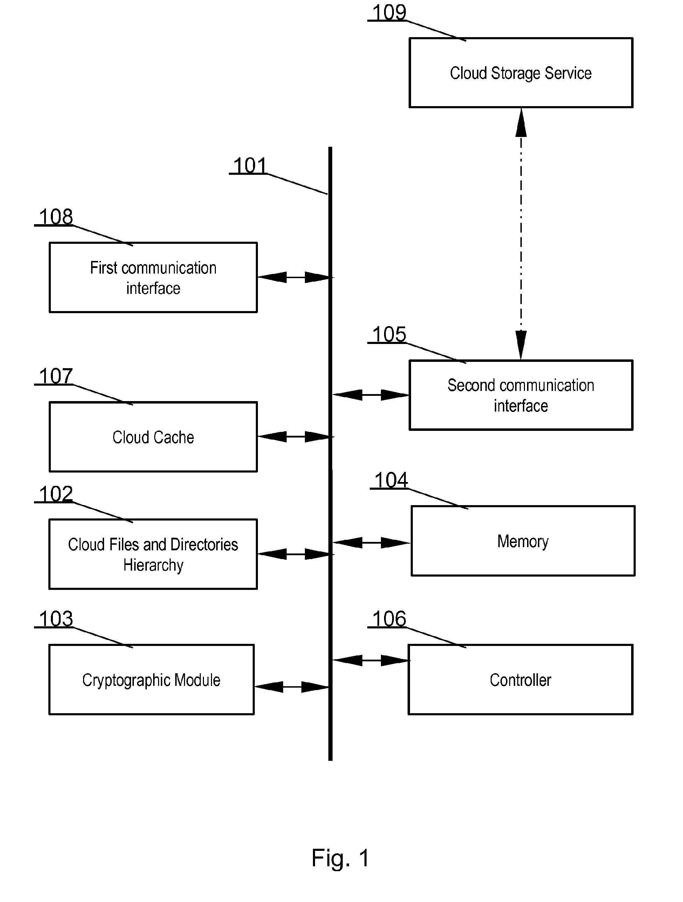

Fig. 1 presents a diagram of the system according to the present invention. The system is a portable storage device.

The system may be realized using dedicated components or custom made FPGA or ASIC circuits. The system comprises a data bus 101 communicatively coupled to a memory 104. Additionally, other components of the system are communicatively coupled to the system bus 101 so that they may be managed by a controller 106.

The memory 104 may store computer program or programs executed by the controller 106 in order to execute steps of the method according to the present invention. Further, the controller 106 is configured to accept read and write requests via the first communication interface 108.

The system comprises a first communication interface 108, which is an explicit interface available for connecting the system to a computer or tablet or smartphone or any suitable device. The first communication interface 108 may be a USB or Bluetooth or Wi-Fi or the like.

After connecting the system to a host computer, its operating system will recognize the system according to the present invention as a "mass storage" device preferably operating according to one of file systems known in the art i.e. FAT or NTFS or EXT or the like. This is due to the fact that a files system used by the cloud storage service may be different than the system of the portable memory. It is not a difficulty as the files and directories structure is independent from the file system. In one embodiment, the cloud cache 107 may be formatted according to FAT or FAT32 or NTFS or EXT or the like.

The system comprises a second communication interface 105, which is a hidden interface available for connecting the system automatically, without user intervention, to a cloud storage service 109 storing user's data files. The second communication interface 105 is considered hidden because a user is not aware when and how the system connects to a cloud storage service, does not know a password and a login, is not aware which cryptographic tools are used to encrypt data during transmission to and from the cloud storage service 109.

The second communication interface 105 may be a 3G or WiMax or LTE or the like. In other words, the second communication interface 105 is inaccessible via the first communication interface 108 and may only be operated by the controller 106.

The hidden interface (i.e. the second communication interface 105) is provided also in order to increase data security as it is not accessible from a host computer, to which the system according to the present invention is connected by means of the first communication interface 108.

The aforementioned encryption and decryption of data may be provided by a cryptographic module 103 operating to one of known cryptographic algorithms under control of the controller 106. Such cryptographic algorithms may be SSL or RSA or AES or the like.

The system comprises two additional memories or memory areas, which may be provided in one larger memory eg. 104. The first memory area is cloud files and directories hierarchy 102, while the second memory area is a cloud cache 107. The amount of memory storage in each of the first and second memory areas may be constant or dynamically allocated.

The cloud cache 107 stores locally files that are selectively determined as required to be stored locally. Criteria of such determination are for example: a given file has recently been stored or accessed, a given file is logically related to other recently accessed files (a recommender analyzing logical relations between files may be used for that purpose). Each file may have an assigned priority, for example a number, defining its priority to be present in the cloud cache 107.

The task of the cloud cache memory 107 is instant access to data frequently or recently used by a user.

All user data are copied to cloud storage service and the cloud cache memory 107 of the portable storage device is preferably fully filled with data. In case a user attempts to write new files to the storage device, files stored in cloud cache memory 107 having lowest priority are removed to make space for the new file(s). After having been added, the new files are preferably immediately copied to the cloud storage service using the second communication interface. The cloud storage service subsequently executes the recommendation process in order to determine priorities of all files of the user. This process may result in changes in the cloud cache107 and some data transfers from the cloud storage service to the cloud cache 107.

The cloud files and directories hierarchy 102 memory reflects all user's data that are stored in the cloud storage service. Therefore, when a user browses files stored in the system according to the present invention, the user virtually operates on the information stored in the cloud storage service. When a user selects a file for retrieval, the file is retrieved from the cloud cache 107 or when it is not present in the cloud cache 107, the file is retrieved from the cloud storage service via the second communication interface 105.

In one embodiment of the present invention, the files hierarchy in the cloud cache 107 may be different than the hierarchy stored in the cloud files and directories hierarchy 102 memory.

From a perspective of a device, to which the system according to the present invention is connected as a mass storage device, it appears as a regular portable memory. The size of the portable memory provided to the device utilizing the memory is the size of the storage space provided at the cloud storage service and not the size of the local memory size of the system according to the present invention.

At times a user may notice higher latency in access to data that are not stored locally in the cloud cache 107. Nevertheless, in case of LTE second communication interface, this latency may be negligible.

The system according to the present invention may use for storage Flash, HDD, RAM or similar types of memories. The solution may also be applied to NAS (Network-attached storage), network storage arrays and even installed on internal hard drive. Applicability in tablets and smartphones is also envisaged. In this way, the user would have access to a huge memory with low production costs of tablet or smartphone without having to worry about memory management and data backup.

An advantage of the system, according to the present invention, is that in case of loss or damage of the portable memory, the cloud storage service operator may issue a duplicate device for a user.

Due to the fact that the cloud storage service is a source of all data, there is a possibility of having more than one system, according to the present invention, being associated with the same data in the cloud storage service. In such case users may operate on shared data.

The system, according to the present invention, may be equipped with a user identifier such as a biometric identifier and a fingerprint reader. Optionally, the system may require a password when accessing data when connected to a computer. This provides additional measures of data protection.

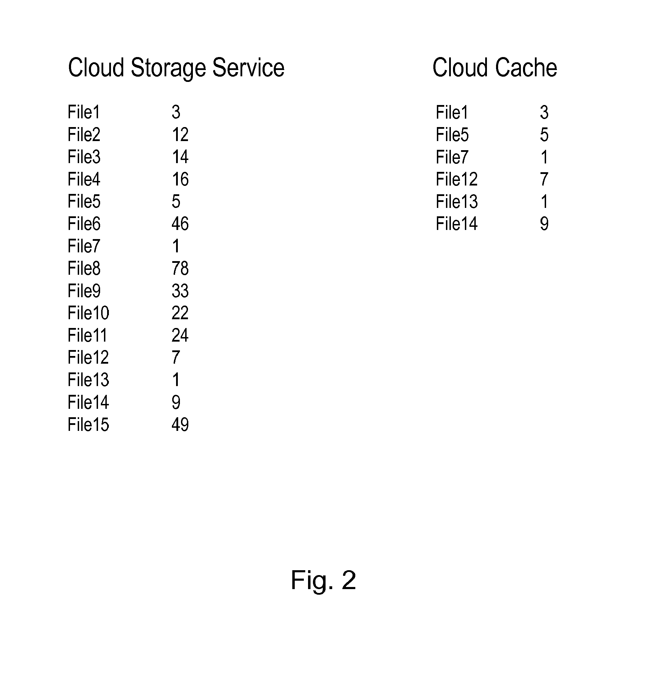

Fig. 2 presents content relation between cloud storage system and cloud cache 107 memory. As indicated, each file stored in the cloud storage service has an associated priority value. This priority value determines the likelihood of the user accessing the data. In this particular example, the lower the priority value the higher the priority of access is logically. Therefore, the cloud cache 107 in this particular example may store only six of 15 files in total. This is of course limited by the size of cloud cache 107, which will typically be much smaller than the size of the storage provided by the cloud storage service. For example cloud cache is 16 GB while the size of the storage provided by the cloud storage service is 1 TB.

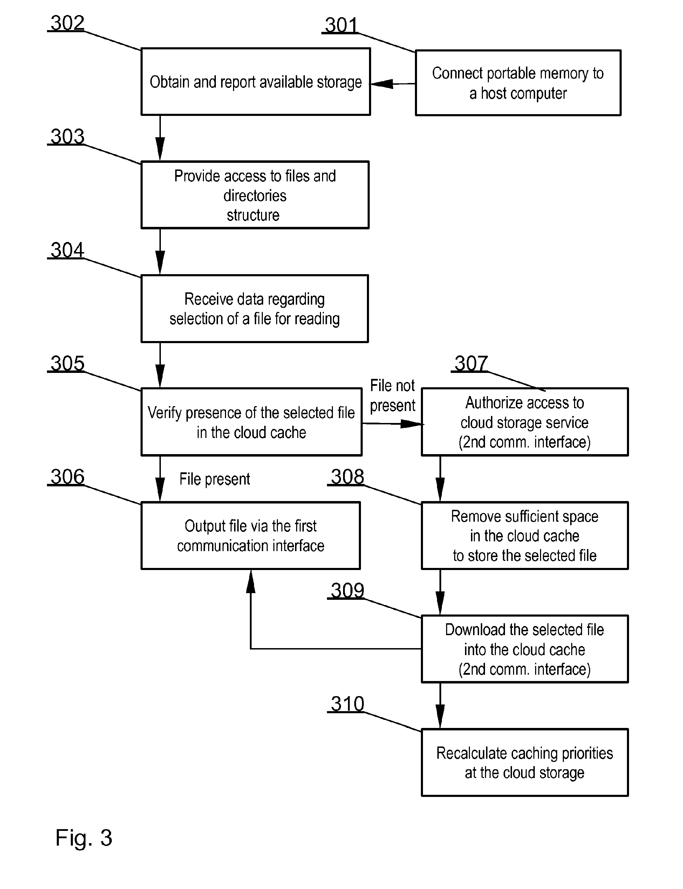

FIG. 3 presents a method according to the present invention. The procedure, executed by the system, according to the present invention, starts at step 301 from connecting the portable memory to a host computer such as a personal computer by means of the first communication interface 108. The portable memory may communicate with the host computer just like any other portable memory such as USB pendrive.

Subsequently, at step 302, the portable memory obtains and reports (via the first communication interface) total and available storage in response to a request of the host computer or without such request. The step of obtaining available storage may be executed in two ways. The first method requires reading a local register, which stores this information and which may be updated by a separate process communicating with a cloud storage service via the second communication interface 105. For example, each time there is a change in storage space assigned to a particular account and/or portable memory, the cloud storage service will notify the portable memory, which after such notification will update the respective register. The other method assumes that at each connection to a host computer, the portable memory will communicate, via the second communication interface 105, with the cloud storage service in order to determine the information regarding total and available storage.

In other words, the controller 106 is configured to report total storage space value assigned to an account, at the cloud storage service, associated with the system as storage capacity of the system and to report available storage space value assigned to an account, at the cloud storage service, associated with the system as available storage capacity

Next, at step 303, the portable memory provides access to files and directories structure stored in the cloud files and directories hierarchy module 102. After that, at step 304, the portable memory awaits reception of data regarding selection of a file for reading. Such selection of a file may also take a form of selecting particular clusters or sectors or otherwise addresses of data of a particular file stored on the portable memory.

Subsequently, at step 305, there is verified presence of the selected file in the cloud cache 107 of the portable memory. In case the requested data are present in the cloud cache 107, at step 306 there is output the selected file via the first communication interface 108. Otherwise, when the requested data (file) are not present in the cloud cache 107, at step 307 there is authorized access to the cloud storage service via the second communication interface 105. This authorization may take a form of providing a proper login and password that are associated with the system but not shared with a user.

Next, at step 308 of the procedure, there is removed sufficient space in the cloud cache 107 to store the selected file. Preferably, the files having lowest priorities are removed.

Thereafter, at step 309, there is executed a download of the selected file from the cloud storage service into the cloud cache 107 via the second communication interface 105. At that stage, the process returns to step 306 by serving the read request and awaiting another read or write request.

Preferably, in response to executing step 309, there is executed recalculation of caching priorities at the cloud storage.

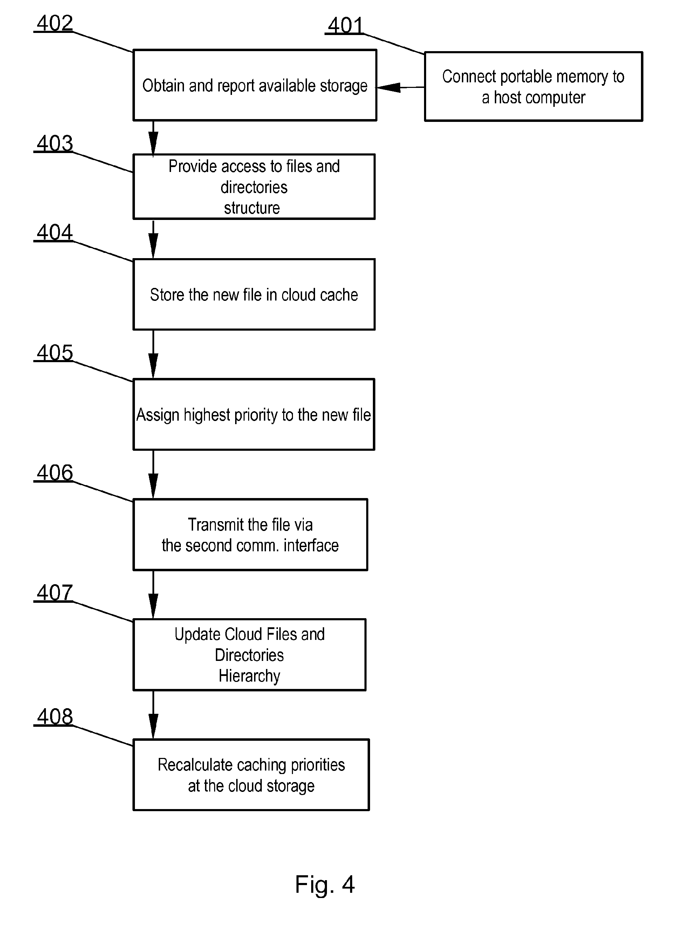

Fig. 3 focuses on reading data. In case of writing data the procedure shown in Fig. 4 applies.

The procedure, executed by the system according to the present invention starts at step 401 from connecting the portable memory to a host computer such as a personal computer by means of the first communication interface 108. The portable memory may communicate with the host computer just like any other portable memory such as USB pendrive.

Subsequently, at step 402, the portable memory obtains and reports total and available storage in response to a request of the host computer or without such request. The step of obtaining available storage may be executed in two ways. The first method requires reading a local register which stores this information and which may be updated by a separate process communicating with a cloud storage service via the second communication interface 105. For example, each time there is a change in storage space assigned to a particular account and/or portable memory, the cloud storage service will notify the portable memory, which after such notification will update the respective register. The other method assumes that at each connection to a host computer, the portable memory system will communicate, via the second communication interface 105, with the cloud storage service in order to determine the information regarding total and available storage space.

Next, at step 403, the portable memory provides access to files and directories structure stored in the cloud files and directories hierarchy module 102. After that, at step 404, the portable memory awaits reception (via the first communication interface) of a valid request for storing of a new file and stores the file (received via the first communication interface) in the cloud cache 107. In case there is insufficient space in the cloud cache to store the new file in its entirety, the files having the lowest priority are removed, from the cloud cache (107), up to a point when the new file may be stored in the cloud cache 107.

Subsequently, at step 405 of the procedure, the new file is assigned the highest priority as the most recent file. Similarly, recently updated files may be assigned highest priority.

Next, at step 406, the new file is transmitted to the cloud storage service via the second communication interface. After the file has been transmitted, at step 407, there is updated the Cloud Files and Directories Hierarchy information stored in module 102. A new entry of a file is provided in a directory selected by a user for the new file.

Lastly, at step 408, there may be executed recalculation of caching priorities at the cloud storage service. After such recalculation the Cloud Files and Directories Hierarchy may be updated with new priorities associated with files and directories. In addition cloud cache content may be altered in response to the aforementioned recalculation.

It can be easily recognized, by one skilled in the art, that the aforementioned method for increasing available portable memory storage space may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A portable memory system, the system comprising:
• a data bus (101) communicatively coupled to a memory (104);
• a controller (106) communicatively coupled to the data bus (101);
• a first communication interface (108), communicatively coupled to the data bus (101), for connecting the system to a computer;
the system being **characterized in that** it further comprises:
• a second communication interface (105) being inaccessible via the first communication interface (108) configured to communicate with a cloud storage service;
• cloud files and directories hierarchy module (102) configured to store information regarding data stored in the cloud storage service;
• a cloud cache module (107) configured to store locally files that are selectively determined, by the cloud storage service, as required to be stored locally;
• wherein the controller (106) is configured to accept read and write requests via the first communication interface (108); and
• wherein the controller (106) is configured to report total storage space value assigned to an account, at the cloud storage service, associated with the system as total storage capacity of the system and to report available storage space value assigned to an account, at the cloud storage service, associated with the system as available storage capacity.

2. The system according to claim 1 being further **characterized in that** the first communication interface (108) is a USB or Bluetooth or Wi-Fi interface.

3. The system according to claim 1 being further **characterized in that** the system is configured to connect automatically to the cloud storage service storing user's data files.

4. The system according to claim 1 being further **characterized in that** the second communication interface (105) is a 3G or WiMax or LTE interface.

5. The system according to claim 1 being further **characterized in that** it comprises a cryptographic module (103) operating under control of the controller (106) and configured to encrypt and decrypt data communicated via the second communication interface (105).

6. A method for reading data in a system according to claim 1, the method being **characterized in that** it comprises the steps of:
• connecting (301) the system to a host computer by means of the first communication interface (108);
• obtaining (302) and reporting, via the first communication interface (108), total and available storage space;
• providing access (303) to files and directories structure stored in the cloud files and directories hierarchy module (102);
• awaiting reception (304) of data regarding selection of a file for reading;
• verifying (305) presence of the selected file in the cloud cache (107);
• in case the selected file is not present in the cloud cache (107), authorizing (307) access to the cloud storage service via the second communication interface (105);
• removing (308) sufficient space in the cloud cache (107) to store the selected file;
• downloading (309) the selected file from the cloud storage service into the cloud cache (107) via the second communication interface (105); and
• output the selected file from the cloud cache (107) via the first communication interface (108).

7. A computer program comprising program code means for performing all the steps of the computer-implemented method according to claim 6 when said program is run on a computer.

8. A computer readable medium storing computer-executable instructions performing all the steps of the computer-implemented method according to claim 6 when executed on a computer.

9. A method for writing data in a system according to claim 1, the method being **characterized in that** it comprises the steps of:
• connecting (401) the system to a host computer by means of the first communication interface (108);
• obtaining (402) and reporting, via the first communication interface (108), total and available storage space;
• providing access (403) to files and directories structure stored in the cloud files and directories hierarchy module (102) wherein each file has a corresponding priority factor;
• awaiting reception (404) of a file write request;
• storing the file, received via the first communication interface, in the cloud cache (107);
• assigning (405) the highest priority to the file;
• transmitting (406) the new file is to the cloud storage service via the second communication interface (105);
• updating (407) the cloud files and directories hierarchy information stored in module (102).

10. The method according to claim 9 being further **characterized in that** it comprises the step of removing, in case there is insufficient space in the cloud cache (107) to store the new file in its entirety, files having the lowest priority, from the cloud cache (107), up to a point when the new file may be stored in the cloud cache (107).

11. A computer program comprising program code means for performing all the steps of the computer-implemented method according to claim 9 when said program is run on a computer.

12. A computer readable medium storing computer-executable instructions performing all the steps of the computer-implemented method according to claim 9 when executed on a computer.

## Amended claims

### Amended claims in accordance with Rule 137(2) EPC.

1. A portable memory system, the system comprising:
• a data bus (101) communicatively coupled to a memory (104);
• a controller (106) communicatively coupled to the data bus (101);
• a first communication interface (108), communicatively coupled to the data bus (101), for connecting the system to a computer;
the system being **characterized in that** it further comprises:
• a second communication interface (105) being inaccessible via the first communication interface (108) and being only operable by the controller, the second communication interface (105) configured to communicate with a cloud storage service;
• cloud files and directories hierarchy module (102) configured to store information regarding data stored in the cloud storage service;
• a cloud cache module (107) configured to store locally files that are selectively determined, by the cloud storage service, as required to be stored locally wherein each file has a corresponding priority factor and files stored locally have the highest priority;
• wherein the controller (106) is configured to accept read and write requests via the first communication interface (108); and
• wherein the controller (106) is configured to report total storage space value assigned to an account, at the cloud storage service, associated with the system as total storage capacity of the system and to report available storage space value assigned to an account, at the cloud storage service, associated with the system as available storage capacity.

2. The system according to claim 1 being further **characterized in that** the first communication interface (108) is a USB or Bluetooth or Wi-Fi interface.

3. The system according to claim 1 being further **characterized in that** the system is configured to connect automatically to the cloud storage service storing user's data files.

4. The system according to claim 1 being further **characterized in that** the second communication interface (105) is a 3G or WiMax or LTE interface.

5. The system according to claim 1 being further **characterized in that** it comprises a cryptographic module (103) operating under control of the controller (106) and configured to encrypt and decrypt data communicated via the second communication interface (105).

6. A method for reading data in a system according to claim 1, the method being **characterized in that** it comprises the steps of:
• connecting (301) the system to a host computer by means of the first communication interface (108);
• obtaining (302) and reporting, via the first communication interface (108), total and available storage space;
• providing access (303) to files and directories structure stored in the cloud files and directories hierarchy module (102);
• awaiting reception (304) of data regarding selection of a file for reading;
• verifying (305) presence of the selected file in the cloud cache (107);
• in case the selected file is not present in the cloud cache (107), authorizing (307) access to the cloud storage service via the second communication interface (105);
• removing (308) sufficient space in the cloud cache (107) to store the selected file;
• downloading (309) the selected file from the cloud storage service into the cloud cache (107) via the second communication interface (105); and
• output the selected file from the cloud cache (107) via the first communication interface (108).

7. A computer program comprising program code means for performing all the steps of the computer-implemented method according to claim 6 when said program is run on a computer.

8. A computer readable medium storing computer-executable instructions performing all the steps of the computer-implemented method according to claim 6 when executed on a computer.

9. A method for writing data in a system according to claim 1, the method being **characterized in that** it comprises the steps of:
• connecting (401) the system to a host computer by means of the first communication interface (108);
• obtaining (402) and reporting, via the first communication interface (108), total and available storage space;
• providing access (403) to files and directories structure stored in the cloud files and directories hierarchy module (102) wherein each file has a corresponding priority factor;
• awaiting reception (404) of a file write request;
• storing the file, received via the first communication interface, in the cloud cache (107);
• assigning (405) the highest priority to the file;
• transmitting (406) the new file is to the cloud storage service via the second communication interface (105);
• updating (407) the cloud files and directories hierarchy information stored in module (102).

10. The method according to claim 9 being further **characterized in that** it comprises the step of removing, in case there is insufficient space in the cloud cache (107) to store the new file in its entirety, files having the lowest priority, from the cloud cache (107), up to a point when the new file may be stored in the cloud cache (107).

11. A computer program comprising program code means for performing all the steps of the computer-implemented method according to claim 9 when said program is run on a computer.

12. A computer readable medium storing computer-executable instructions performing all the steps of the computer-implemented method according to claim 9 when executed on a computer.
